# EUROPÄISCHE PATENTANMELDUNG

(11) **EP 3 413 016 A2**
(43) Veröffentlichungstag der Anmeldung: **12.12.2018**
(21) Anmeldenummer: 18175005.0
(22) Anmeldetag: 30.05.2018
(51) Int. Cl.: G01C 11/02, G01B 11/02, G01B 11/24, G02B 13/06

(54) **AUFMASSGERÄT ZUR ERMITTLUNG EINES GEOMETRISCHEN MESSWERTES**

(30) Priorität: 06.06.2017 DE 102017112443
(71) Anmelder: Testo SE & Co. KGaA, 79853 Lenzkirch (DE)
(72) Erfinder: Evers-Senne, Jan-Friso, 79822 Titisee-Neustadt (DE); Bueno-Plaza, Pablo, 79102 Freiburg (DE); Altendorf, Hellen, 79199 Kirchzarten (DE); Adenauer, Tobias, 79249 Merzhausen (DE); Einighammer, Jens, 79100 Freiburg (DE)
(74) Vertreter: Mertzlufft-Paufler, Cornelius

(57) **Zusammenfassung**

Aufmaßgerät (1) zur Ermittlung eines geometrischen Messwertes, mit einer Bilderfassungseinrichtung mit einem Fischaugenobjektiv (5) und einem planaren Bildsensor (6) zur Erfassung eines Bildes des Objektivs (5), und einer Bildverarbeitungseinrichtung.

## Beschreibung

Die Erfindung beschreibt ein Aufmaßgerät, mit einer Bilderfassungseinrichtung mit einem Objektiv und einem planaren Bildsensor zur Erfassung eines Bildes des Objektivs, und einer Bildverarbeitungseinrichtung, die zur Ermittlung eines geometrischen Messwertes eingerichtet ist.

Die Ermittlung eines geometrischen Messwertes erfolgt dabei beispielsweise nach einem photogrammetrischen Verfahren. Die Bilderfassungseinrichtung kann dabei beispielsweise eine handelsübliche Digitalkamera sein. Damit in dem aufgenommenen Bild geometrische Größen bestimmbar sind, muss die Bilderfassungseinrichtung kalibriert sein.

Das erfindungsgemäße Aufmaßgerät dient insbesondere zur Vermessung von Gebäuden und Gebäudefassaden. Es erfolgt daher eine Abbildung eines planaren Objekts auf einen planaren Bildsensor. Dafür werden in der Regel normale Objektive verwendet, die eine verzeichnungsfreie Abbildung (gnomonische Abbildung) erlauben. Verzeichnungsfrei bedeutet dabei, dass gerade Linien des Objekts auch im Bild gerade sind.

Die Abbildung erfolgt nach der verallgemeinerten Form r = f tan θ.

Allerdings kann durch die Kamerapose und/oder durch Abbildungsfehler des Objektivs das Bild mehr oder weniger Verzeichnet werden. Falls die Bildebene des Bildsensors nicht parallel zur Objektebene ausgerichtet ist, treten beispielsweise Trapezverzerrungen (stürzende Linien) auf. Da eine Linse nicht perfekt sein kann, treten auch weitere Verzeichnungen auf, wie etwa Tonnen- oder Kissenverzeichnungen, chromatische Aberrationen und viele weitere Verzeichnungen. Diese Verzeichnungen müssen zunächst korrigiert werden, bevor das Bild zur Bestimmung der Messgrößen verwendbar ist.

Darüber hinaus bedingt die Abbildungsart des Objektivs, dass Objekte oder Merkmale am Bildrand stark verzerrt dargestellt werden. Dadurch nimmt die Genauigkeit für Messungen zum Bildrand stark ab.

Ein weiterer Nachteil im Stand der Technik besteht darin, dass Gebäudefassaden meist nicht mit einem Bild erfassbar sind. In der Praxis werden daher mehrere Einzelbilder aufgenommen und einzeln bearbeitet oder zu einem großen Bild zusammengefügt. Um die Anzahl der notwendigen Einzelbilder zu reduzieren wäre die Verwendung von Weitwinkelobjektiven vorteilhaft. Allerdings steigen die Verzerrungen mit sinkender Brennweite des Objektivs stark an. Um die erforderliche Genauigkeit für die Messwerte zu erhalten ist es daher notwendig auf zu starke Weitwinkel zu verzichten und mehrere Einzelbilder auszuwerten. Daher ist der zeitliche Aufwand zur Vermessung einer Gebäudefassade sehr groß.

Aufgabe der Erfindung ist es daher ein Aufmaßgerät der vorgenannten Art zu schaffen, mit dem der Aufwand zur Ermittlung eines geometrischen Messwertes geringer und die Genauigkeit größer ist.

Diese Aufgabe wird erfindungsgemäß durch ein Aufmaßgerät mit den Merkmalen des Hauptanspruchs gelöst. Das Aufmaßgerät ist dabei insbesondere dadurch gekennzeichnet, dass das Objektiv der Bilderfassungseinrichtung eine nicht-gnomonische Abbildungfunktion besitzt, wodurch die Verzerrungen zum Bildrand geringer sind. Das erfindungsgemäße Aufmaßgerät besitzt daher eine über das gesamte Bild homogene Genauigkeit.

In einer vorteilhaften Ausführung der Erfindung definiert das Objektiv ein Projektionszentrum. Dadurch wird eine Zentralprojektion realisiert. Das hat den Vorteil, dass gegenüber dem Stand der Technik die Genauigkeit zum Bildrand hin größer ist.

Insbesondere zweckmäßig ist es, wenn das Objektiv ein Fischaugenobjektiv ist, da dadurch größere Bildwinkel erzielbar sind.

In einer besonders zweckmäßigen Ausführung besitzt das Objektiv eine äquidistante Abbildungsfunktion. Die Abbildung ist dabei linear abhängig vom Winkel und enthält insbesondere keinen trigonometrischen Anteil. Im Gegensatz zu einer perspektivischen Abbildungsfunktion, bei der die Abbildung vom Tangens des Winkels abhängig ist, sind damit auch Bildwinkel größer als 180° möglich.

In einer vorteilhaften Ausführung der Erfindung ist der Bildwinkel des Objektivs größer als 90°, insbesondere größer als 180°. Dadurch ist ein großes Objekt mit weniger Einzelbildern erfassbar.

In einer vorteilhaften Ausführung der Erfindung definiert die Abbildungsfunktion eine lineare Abhängigkeit zwischen einem Radius r und dem Winkel θ. Dies stellt die ideale Verkörperung einer äquidistanten Abbildungsfunktion dar. Dies hat den Vorteil, dass die Abbildungsfunktion einfach ist.

Bei einer strikt äquidistanten Abbildung vergrößert sich der Fußabdurck eines Pixel zum Bildrand hin, wodurch eine Messung erschwert wird. Bei einer vorteilhaften Weiterbildung der Erfindung ist die Abbildungsfunktion durch ein polynomielles Verzeichnismodell beschreibbar.

Der Vorteil dabei ist, dass die Verzeichnung vorzugsweise so gewählt werden kann, dass sich im Bildrandbereich der Fußabdruck eines Pixels auf dem auszumessenden Objekt nicht vergrößert. Dies wird vorzugsweise dadurch erreicht, dass das Objektiv derart ausgebildet ist, dass es im Randbereich stärker verzerrt. Die Abbildungsfunktion ändert sich daher zum Randbereich hin, so dass die Abbildungsfunktion selbst eine Funktion des Winkels ist.

Dabei besitzt die Abbildungsfunktion neben der linearen Abhängigkeit vom Winkel noch Abhängigkeiten höherer Potenzen. Die Abbildungsfunktion des Objektivs weist daher wenigstens ein zusätzliches Polynomglied eines höheren, insbesondere dem dritten oder höher, Grades auf. Aufgrund der Symmetrie der Abbildung enthält das Polynom vorzugsweise nur die Polynomglieder mit ungeraden Potenzen.

Es kann auch zweckmäßig sein, wenn die Abbildungsfunktion des Objektivs zusätzlich wenigstens eine nichtlineare Abhängigkeit des Winkels θ besitzt, insbesondere eine trigonometrische Funktion.

Aufgrund von Herstellungstoleranzen kann es zu Abweichungen der Abbildungsfunktionen bei den Objektiven kommen. Es ist daher vorteilhaft, wenn die Abbildungsfunktion des Objektivs durch eine Kalibrierung mit einem Referenzobjekt ermittelbar ist. Der Vorteil dabei ist, dass die Abbildungsfunktion für jedes Objektiv genau ermittelbar ist, wodurch die Genauigkeit der Messungen steigt.

Die Abbildungsfunktion ist vorzugsweise nach der Kalibrierung in der Bildverarbeitungseinrichtung hinterlegbar oder hinterlegt. Auf diese Weise kann für Berechnungen auf die Abbildungsfunktion zurückgegriffen werden.

In einer vorteilhaften Ausführung der Erfindung weist die Bildverarbeitungseinrichtung einen Merkmalsfinder zur Erkennung von Punkt- und/oder Kantenmerkmalen in den aufgenommenen Bildern auf, wobei der Merkmalsfinder zur Kantenerkennung in den aufgenommenen Bildern erkannte und mit der Abbildungsfunktion transformierte Linien an eine Gerade approximiert.

Im Gegensatz zum Stand der Technik werden bei der erfindungsgemäßen Ausführung nicht die aufgenommenen Bilder mit der Abbildungsfunktion transformiert oder entzerrt, und in den transformierten Bildern die Kantenmerkmale gesucht. Stattdessen werden in den aufgenommenen Bilden Linienmerkmale gesucht, die dann mittels der Abbildungsfunktion an Geraden oder andere bekannte Geometrien, etwa Bögen, approximiert werden. Dadurch wird die Genauigkeit der Kantenerkennung wesentlich verbessert. Da die Transformationen jeweils nur lokal für eine Linie erfolgen ist die Berechnung wesentlich einfacher und schneller durchführbar. Weiterhin ist dadurch die Genauigkeit verbessert, da nach erfolgter Kantenerkennung die weiteren Bearbeitungsschritte auf dem aufgenommenen Bild vorgenommen werden. Das bedeutet, die als Kante oder andere Geometrie identifizierte Linie wird im aufgenommenen Bild lediglich als solche markiert. Alle weiteren Berechnungen erfolgen dann mit Hilfe der Linie im aufgenommenen Bild.

Auf diese Weise ist aus mehreren Bildern ein dreidimensionales Bild oder Modell eines aufgenommenen Objekts erstellbar.

Zur Einpassung eines weiteren Bildes in ein bestehendes Modell ist es vorteilhaft, wenn die Bildverarbeitungseinrichtung einen Merkmalsfinder zur Erkennung von Punkt-und/oder Kantenmerkmalen in den aufgenommenen Bildern aufweist, wobei der Merkmalsfinder zur Kantenerkennung in einem aufgenommenen Bild mit der Abbildungsfunktion transformierte Kanten benutzt. Das bedeutet, dass eine bereits im Modell vorhandene Kante mit der Abbildungsfunktion transformierbar ist, um diese als Linie in dem aufgenommenen Bild zu identifizieren. Auf diese Weise ist ein sogenanntes Rematching von bekannten Merkmalen in neuen Bilden möglich ohne dass ein gesamtes Bild transformiert wird.

Grundlegend ist dabei, dass jeweils nur Merkmale mit der Abbildungsfunktion transformiert werden und nicht ganze Bilder. Dadurch ist die Berechnung einfacher und schneller durchführbar. Dazu kann eine solche Bildverarbeitungseinrichtung auch weniger Leistungsfähig ausgebildet sein, so dass eine Integration auch in Handgeräte einfacher möglich ist.

In einer vorteilhaften Ausführung der Erfindung sind die Bilderfassungseinrichtung und die Bildverarbeitungseinrichtung jeweils oder gemeinsam in einem tragbaren Gerät integriert. Besonders vorteilhaft ist eine Integration in einem gemeinsamen tragbaren Gerät. Ein solches Gerät kann zusätzlich einen Bildschirm aufweisen zur Darstellung von Bildern und anderen Informationen. In dem Bildschirm können beispielsweise zur Aufnahme von Bildern ein Bild der Bilderfassungseinrichtung darstellbar ist

Insbesondere wenn die Bilderfassungseinrichtung und die Bildverarbeitungseinrichtung in separaten Geräten ausgebildet sind, ist es zweckmäßig, wenn die Bilderfassungseinrichtung zum Übertragen der Bilddaten an die Bildverarbeitungseinrichtung ausgebildet ist. Dazu kann beispielsweise eine drahtgebundene oder drahtlose Schnittstelle vorhanden sein. Insbesondere vorteilhaft ist hier eine Funkschnittstelle, mit der die Bilddaten auch über eine weitere Entfernung übertragbar sind.

In einer vorteilhaften Ausführung ist der Bildsensor senkrecht zur optischen Achse des Objektivs angeordnet. Dadurch ist eine einfachere Ausrichtung der Bildebene des Bildsensors zu einem planaren Objekt einfacher.

Das erfindungsgemäße Verfahren zum Messen einer geometrischen Größe mit einem Aufmaßgerät mit einer Bilderfassungseinrichtung mit einem Objektiv, das ein Projektionszentrum definiert, einem planaren Bildsensor zur Erfassung eines Bildes des Objektivs, und einer Bildverarbeitungseinrichtung, die zum Erstellen eines dreidimensionalen Modells aus mehreren aufgenommenen Bildern eingerichtet ist, ist insbesondere dadurch gekennzeichnet,
- dass in einem Bildaufnahmeschritt mit der Bildaufnahmeeinrichtung mehrere, nicht perspektivische Bilder eines Objekts aufgenommen werden,
- dass in einem Kantenerkennungsschritt in den aufgenommenen Bildern Linien erkannt werden und diese Linien mit der Abbildungsfunktion des Objektivs transformiert werden, wobei die Linien, die sich als Gerade approximieren lassen, als Kantenmerkmal registriert werden,
- dass in einem Modellierschritt aus Linien, die den registrierten Kantenmerkmalen zugeordnet sind, ein dreidimensionales Modell berechnet wird,
- dass die geometrische Größe in dem dreidimensionalen Modell bestimmt wird.

In einer Weiterbildung werden die erkannten Linien nicht nur an geraden Kanten approximiert, sondern beliebigen bekannten Geometrien, wie etwa Bögen.

Vorteilhaft ist dabei, dass die Kantenerkennung in dem aufgenommenen Bild erfolgt und nur die erkannten Linien mit der Abbildungsfunktion transformiert werden. Auf diese Weise ist eine wesentlich schnellere Berechnung möglich. Darüber hinaus ist auch die Genauigkeit des dreidimensionalen Modells höher, da dieses aus den aufgenommenen Bildern erstellt wird. Aus diesem Grund sind auch die Messwerte, die in diesem Modell ermittelt werden genauer.

Insbesondere vorteilhaft ist es dabei, wenn in einem Kalibrierschritt die Abbildungsfunktion des Objektivs bestimmt wird, wobei aus mehreren Bildern eines Referenzobjekts ein Modell berechnet wird und aus den Abweichungen des Modells zu einem Referenzmodell die Abbildungsfunktion bestimmt wird.

In einer zweckmäßigen Weiterbildung der Erfindung wird in einem Bündelblockausgleichsschritt neben dem eigentlichen Bündelblockausgleich auch eine Optimierung von Kameraparametern durchgeführt. Dabei können diese Kameraparameter beispielsweise von der Umgebungstemperatur oder anderen Umgebungseinflüssen abhängig sein.

Diese Optimierung kann beispielsweise Korrekturen der Abbildungsfunktion beinhalten.

Die Erfindung ist nachfolgend anhand der beiliegenden Zeichnungen näher beschrieben.

Es zeigt:
- Fig. 1: eine Frontansicht eines erfindungsgemäßen Aufmaßgeräts,
- Fig. 2: eine Seitenansicht des Aufmaßgeräts der Fig. 1,
- Fig. 3: ein Diagramm der Abbildungsfunktionen des erfindungsgemäßen Fischauges im Vergleich zu verschiedenen Objektiven,
- Fig. 4: ein Diagramm der relativen Verzeichnung eines erfindungsgemäßen Fischaugenobjektivs im Vergleich zu einem idealen Fischaugenobjektiv,
- Fig. 5: ein Diagramm das den Fußabdruck verschiedener Objektive mit unterschiedlichen Abbildungsfunktionen zeigt,
- Fig. 6: eine schematische Darstellung zur Veranschaulichung des Merkmalsfinders
- Fig. 7: eine schematische Darstellung der Merkmalsfindung in mehreren Bildern.

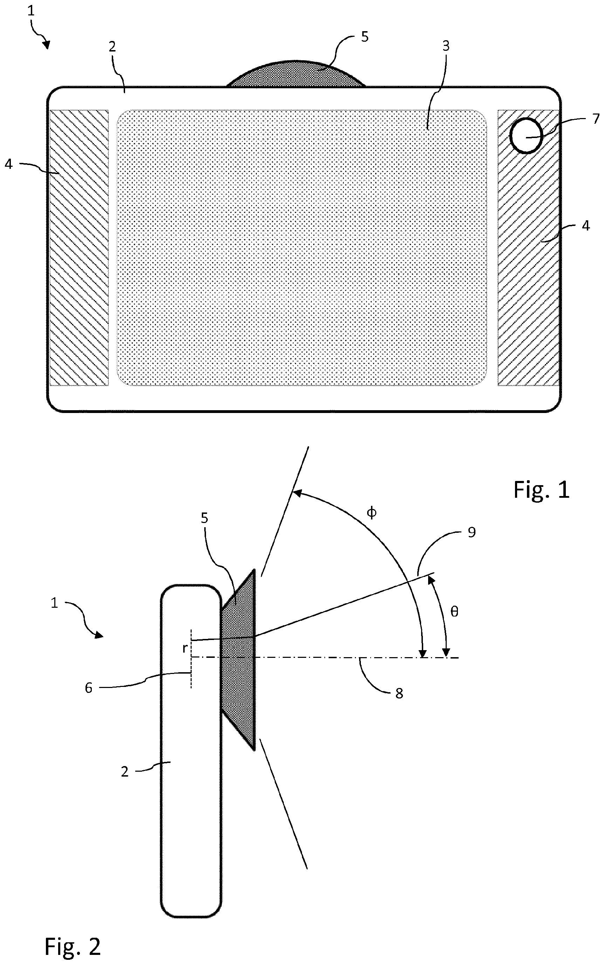

Die Fig. 1 zeigt eine schematische Darstellung eines erfindungsgemäßen Aufmaßgeräts 1. Das Aufmaßgerät 1 weist ein im Wesentlichen quaderförmiges Gehäuse 2 auf. Das Aufmaßgerät 1 weist einen Bildschirm 3 auf, in dem Informationen grafisch Darstellbar sind. Beidseits neben dem Bildschirm 3 sind Handgriffe 4 angeordnet, mit denen das Aufmaßgerät 1 sicher handhabbar ist.

Im Beispiel ist auf der dem Bildschirm 3 gegenüberliegenden Seite des Gehäuses 2 ein erfindungsgemäßes Fischaugenobjektiv 5 angeordnet. Im Innern des Aufmaßgeräts 1 befindet sich ein planarer Bildsensor 6 zur Erfassung eines vom Objektiv 5 erzeugten Bildes.

Zur Bedienung kann das Aufmaßgerät mit einem berührungsempfindlichen Bildschirm ausgestattet sein. Im Beispiel weist das Aufmaßgerät zusätzliche eine Auslösetaste 7 auf, mit der die Aufnahme eines Bildes auslösbar ist.

Die Seitenansicht der Fig. 2 zeigt, dass das Fischaugenobjektiv 5 im Beispiel über das Gehäuse 2 vorsteht und die optische Achse 8 des Objektivs 5 im Wesentlichen senkrecht zu dem im Gehäuse 2 angeordneten Bildsensor 6 ausgerichtet ist. Das Fischaugenobjektiv weist im Beispiel einen Öffnungswinkel φ von 70° auf. Der Bildwinkel beträgt daher 140°. Selbstverständlich sind auch andere Objektive mit anderen Bildwinkeln möglich.

Das Fischaugenobjektiv 5 weist besondere Eigenschaften auf, die das erfindungsgemäße Aufmaßgerät 1 erst ermöglichen. So besitzt das Objektiv 5 eine speziell angepasste Abbildungsfunktion, die ausgehend von einer ideal äquidistanten Abbildungsfunktion im Randbereich bewusst in Richtung einer gnomonischen Abbildung verzerrt ist.

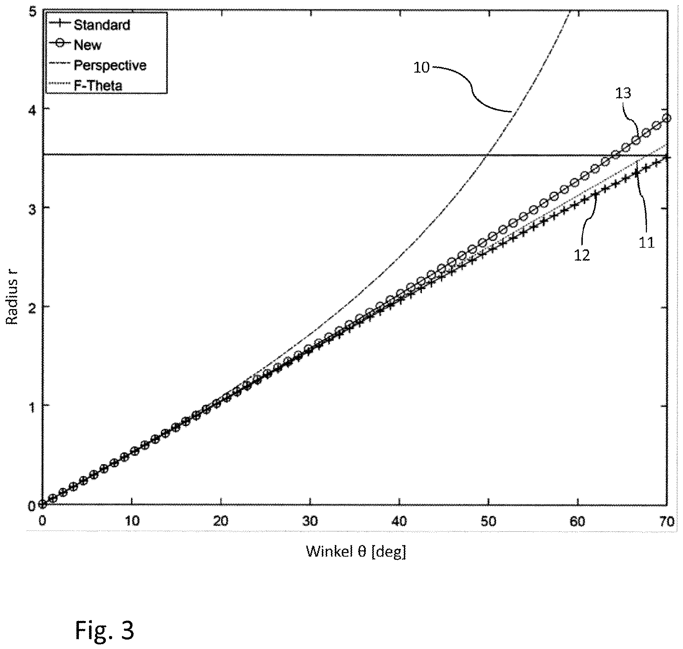

In Fig. 3 ist die Abbildungsfunktion des erfindungsgemäßen Fischaugenobjektivs 5 im Vergleich zu anderen Abbildungsfunktionen in einem Schaubild dargestellt. Die x-Achse zeigt darin den Einfallswinkel θ eines Lichtstrahls 9 zur optischen Achse 8 des Objektivs 5. Die y-Achse zeigt den Abstand r den das Bild des Lichtstrahls auf dem Bildsensor 6 zur optischen Achse 8 besitzt.

Die punktgestrichelte Kurve 10 zeigt die Abbildungsfunktion eines perspektivischen Objektivs mit gnomonischer Abbildung. Die Abbildungsfunktion kann mit r = f tan θ beschrieben werden. Durch den Tangensanteil werden Objekte am Bildrand stark vergrößert dargestellt. Außerdem ist die Abbildungsfunktion dadurch auf einen maximalen Öffnungswinkel kleiner 90° begrenzt, wobei schon bei Öffnungswinkeln ab 60° im Randbereich die Verzerrung so groß ist, dass dort die Genauigkeit stark abnimmt.

Die gepunktete Kurve 11 entspricht einer idealen äquidistanten Abbildungsfunktion, die mit r = f θ beschrieben werden kann. Diese Abbildungsfunktion ist in diesem Diagramm eine Gerade.

Die Kurve 12 mit den Plussysmbolen entspricht einer realen oder normalen äquidistanten Abbildungsfunktion. Diese Kurve liegt unterhalb der idealen Abbildungsfunktion 11, weshalb zum Randbereich hin eine Verzerrung auftritt. Objekte im Randbereich werden dadurch gestaucht, was für die erfindungsgemäße Anwendung nachteilig ist.

Das erfindungsgemäße Fischaugenobjektiv 5 besitzt daher eine angepasste, äquidistante Abbildungsfunktion, im Bild durch die Kurve 13 mit den Kreisen dargestellt. Erfindungsgemäß ist im Randbereich die Abbildungsfunktion in Richtung perspektivische Abbildung hin geändert, so dass zum Randbereich Objekte eher gestreckt werden. Das Abbildungsverhalten im Randbereich ist daher genau Umgekehrt, wie bei der realen Abbildungsfunktion 12. Insbesondere bei der Abbildung von ebenen Objekten, steigt dadurch im Randbereich die Genauigkeit.

Die erfindungsgemäße Abbildungsfunktion kann mit einem polynomiellen Verzeichnismodell beschrieben werden. Die Abbildungsfunktion weist dabei insbesondere auch Terme höherer Ordnung auf. Eine Abbildungsfunktion kann demnach wie folgt beschrieben sein: r = a θ + b θ^3 + c θ^5 ...

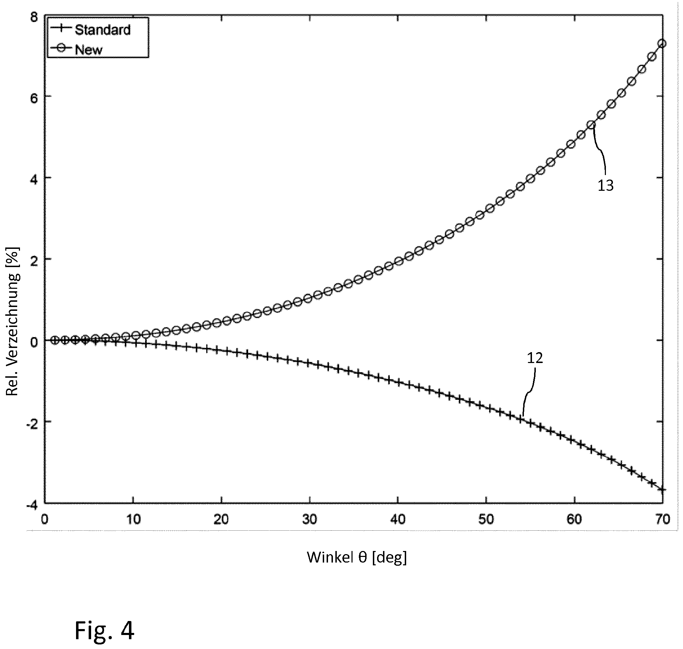

In Fig. 4 ist zur Verdeutlichung der Verbesserung der Genauigkeit die relative Verzeichnung verschiedener Abbildungsfunktionen in Abhängigkeit des Eintreffwinkels θ dargestellt. Wie hier nochmal zu sehen ist, weist das erfindungsgemäße Fischaugenobjektiv 5 eine gegenüber einem normalen Fischaugenobjektiv gegensätzliche Verzeichnung im Randbereich auf.

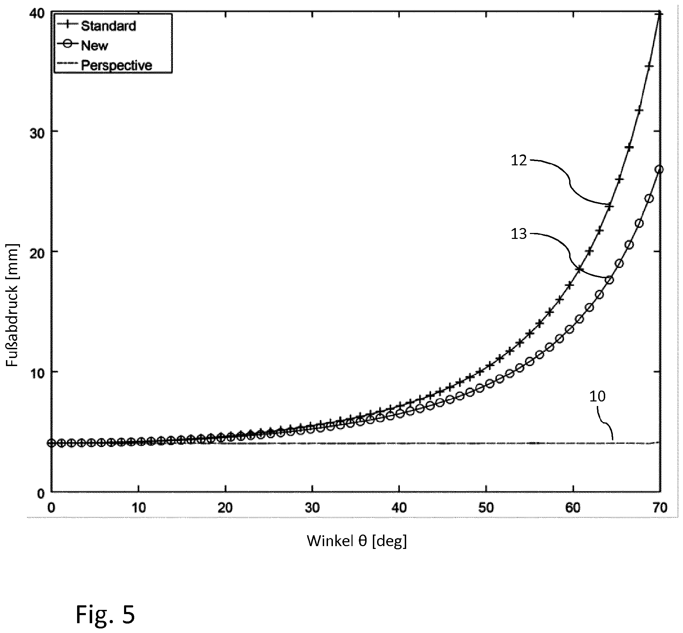

Durch die erfindungsgemäß angepasste Verzeichnung im Randbereich ist auch der Fußabdruck eines abgebildeten Objekts des erfindungsgemäßen Fischaugenobjektivs geringer gegenüber einem normalen Fischaugenobjektiv. Der Fußabdruck des erfindungsgemäßen Objektivs ist in Fig. 5 im Vergleich zu einem normalen Fischauge und einem perspektivischen Objektiv gezeigt. Die Symbole der Kurven in den Fig. 3 bis 5 ist jeweils für die entsprechenden Objektive und Abbildungsfunktionen identisch.

Das erfindungsgemäße Fischaugenobjektiv 5 ist speziell auf eine solche Abbildungsfunktion hin entwickelt und angepasst. Insbesondere die Änderung der Abbildungsfunktion im Randbereich hin zu einer eher perspektivischen Verzeichnung ermöglicht insgesamt eine wesentlich genauere Bestimmung von geometrischen Messgrößen mit dem erfindungsgemäßen Aufmaßgerät 1.

Neben dem speziell angepassten Fischaugenobjektiv 5 trägt auch eine speziell angepasste erfindungsgemäße Bildverarbeitung im erfindungsgemäßen Aufmaßgerät 1 entscheidend für die hohe Messgenauigkeit bei.

Ein erfindungsgemäßes Aufmaßgerät 1 weist eine Bilderfassungseinrichtung mit einem Fischaugenobjektiv 5 auf, das eine angepasste Abbildungsfunktion wie oben beschrieben besitzt, einen planaren Bildsensor 6 zur Erfassung eines Bildes des Objektivs 5, und eine Bildverarbeitungseinrichtung, zum Bestimmen einer geometrischen Größe innerhalb der aufgenommenen Bilder.

Das bestimmen einer geometrischen Größe, etwa die Länge eines im Bild befindlichen Objekts, ist mit Hilfe von photogrammetrischen Methoden ausreichend bekannt.

Eine besonders vorteilhafte Methode besteht darin, aus mehreren Einzelbildern ein dreidimensionales Modell des abgebildeten Objekts zu erstellen. Auf diese Weise können anhand des Modells alle Abmessungen innerhalb des Modells bestimmt werden.

Die Erstellung eines dreidimensionalen Modells aus mehreren aufgenommenen Bildern ist im Stand der Technik ebenfalls hinreichend bekannt. Prinzipiell werden dazu in den Bildern markante Punkte oder Kanten erkannt, die in den einzelnen Bildern identifizierbar sind. Aufgrund der bekannten Lage der Bildaufnahmevorrichtung zum Objekt und der unterschiedlichen Aufnahmeposen können die Punkte oder Linien zueinander dreidimensional in Bezug gesetzt werden.

Die Kantenerkennung setzt in der Regel gerade Kanten voraus.

Bei einer Bildaufnahmevorrichtung mit einem perspektivischen Objektiv bleiben gerade Kanten in der Regel erhalten. Eventuell auftretende Verzerrungen werden gemäß dem Stand der Technik nach der Bildaufnahme kompensiert. Dies kann beispielsweise durch Berechnung mit einer Korrekturfunktion erfolgen. Es muss daher immer zuerst das gesamte Bild korrigiert werden. Dafür ist eine aufwändige und/oder leistungsstarke Bildverarbeitung notwendig. Zudem ist die Kantenerkennung dann ungenau, da sie nur auf dem korrigierten Bild erfolgt.

Die aufgenommenen Bilder sind bei dem erfindungsgemäßen Aufmaßgerät jedoch durch das Fischaugenobjektiv verzerrt, so dass insbesondere gerade Kanten im Bild gekrümmt erscheinen. Bekannte Verfahren sehen hier nun vor, die aufgenommenen Bilder zunächst vollständig mit der Abbildungsfunktion so zu transformieren, dass Geraden im Bild wieder gerade erscheinen.

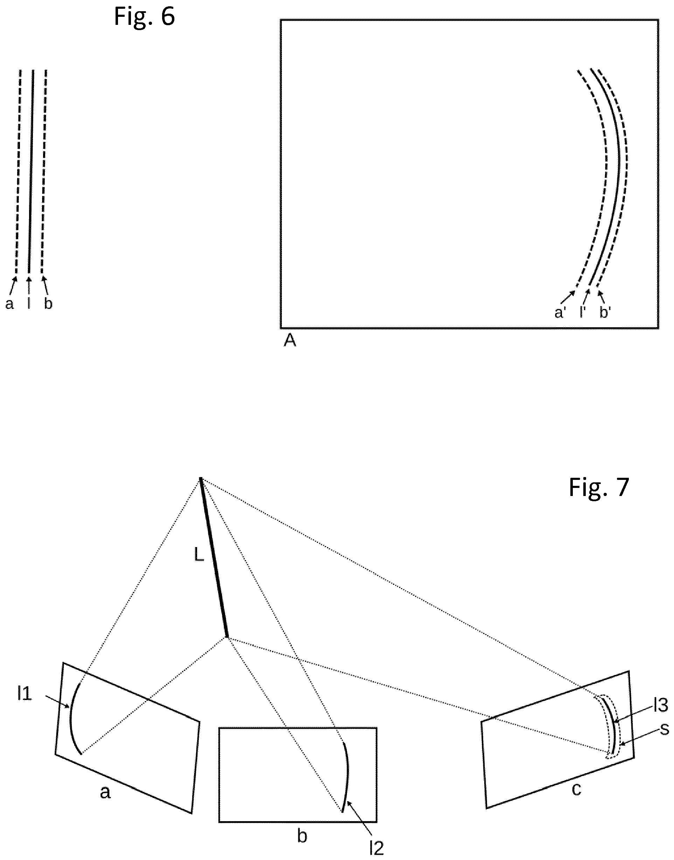

Die Erfindung geht hier jedoch einen anderen Weg, wobei das erfindungsgemäße Verfahren nachfolgend mit Bezug auf die Fig. 6 näher erläutert ist.

Zunächst werden in einem Bildaufnahmeschritt mit der Bildaufnahmeeinrichtung mehrere, nicht perspektivische Bilder eines Objekts aufgenommen.

In einem Kantenerkennungsschritt werden in einem aufgenommenem Bild A nun Linien l' erkannt, die beliebig gekrümmt sein können. Diese erkannten Linien l' werden mithilfe der bekannten Abbildungsfunktion lokal transformiert. Dabei wird geprüft, ob die transformierte Linie l' einer geraden Kante l entspricht oder an eine gerade Kante l annäherbar ist. Anstelle von geraden Kanten können auch andere bekannte Geometrien, wie etwa Bögen, verwendet werden. Wichtig dabei ist, dass die Geometrie in dem transformierten Bereich erkennbar ist. Der Vorteil besteht nun darin, dass zunächst eine Transformation nur für wenige Bildbereiche durchgeführt werden muss. Dies kann sehr schnell erfolgen.

Dabei werden die Linien l, die sich als Gerade approximieren lassen, als Kantenmerkmal registriert und zur weiteren Verwendung zur Erstellung eines dreidimensionalen Modells zwischengespeichert.

Es wird dann um die erkannte Struktur l ein Bereich definiert, der durch zwei parallele Strukturen a und b beidseits der Linie l begrenzt ist. Dieser Bereich wird nun in das aufgenommene Bild mithilfe der Abbildungsfunktion rücktransformiert. Die Begrenzungslinien a und b werden zu den Linien a' und b', die im aufgenommenen Bild nun einen Bereich um die Linie l' begrenzen.

Innerhalb dieses Bereichs im aufgenommenen Bild können nun Deskriptoren erkannt oder gefunden werden, die zur sicheren Identifizierung der Merkmale in anderen Bildern verwendet werden können.

In einem Modellierschritt wird nun aus den untransformierten Linien l', die den registrierten Kantenmerkmalen entsprechend ein dreidimensionales Modell berechnet. Dabei kann nach einem bekannten Verfahren vorgegangen werden.

Der Trick besteht hier, dass zur Bestimmung des dreidimensionalen Modells die aufgenommenen Bilddaten verwendet werden und nicht die transformierten Geraden. Diese weisen eine wesentlich höhere Genauigkeit und Informationsdichte auf, als die transformierten Bildbereiche. Aus diesem Grund ist das daraus berechnete Model wesentlich genauer. Insbesondere in Zusammenhang mit der erfindungsgemäß angepassten Abbildungsfunktion des Fischaugenobjektivs ist die Genauigkeit vor allem in den Randbereichen wesentlich größer als im Stand der Technik.

Sobald das dreidimensionale Modell erstellt ist, kann eine beliebige geometrische Größe in dem Modell bestimmt werden.

Zur Erstellung eines dreidimensionalen Modells sind mindestens drei Bilder notwendig, die im Wesentlichen dieselben Merkmale beinhalten, jedoch aus unterschiedlichen Aufnahmeposen aufgenommen wurden.

Sobald ein Modell besteht, kann dieses durch weitere Aufnahmen verbessert werden. Das erfindungsgemäße Verfahren der lokalen Transformation kann auch dazu verwendet werden. In Fig. 7 ist eine Linie L gezeigt, die in einem dreidimensionalen Modell bereits vorhanden ist und in den Bilden a und b als Linien l1 und l2 bereits identifiziert wurde.

Um die Linie L in einem neuen Bild c zu finden, kann nun anhand der Aufnahmepose des Bildes c ein transformiertes Abbild l3 der Linie L in das Bild c projiziert werden. Dabei kann ein Bereich s um die Linie l3 verendet, der den Suchraum begrenzt, in dem dann per Kanten- oder Linienerkennung eine Linie l3 gefunden werden kann.

### Bezugszeichenliste

- 1: Aufmaßgerät
- 2: Gehäuse
- 3: Bildschirm
- 4: Handgriffe
- 5: Fischaugenobjektiv
- 6: Bildsensor
- 7: Auslösetaste
- 8: optische Achse
- 9: einfallender Lichtstrahl
- 10: Kurve zu perspektivischer Abbildung
- 11: Kurve zu ideal-äquidistanter Abbildung
- 12: Kurve zu real-äquidistanter Abbildung
- 13: Kurze zu erfindungsgemäßer Abbildung
- r: Radius in Bezug auf die optische Achse
- φ: Öffnungswinkel des Objektivs
- θ: Einfallswinkel in Bezug auf die optische Achse

## Patentansprüche

1. Aufmaßgerät (1), mit einer Bilderfassungseinrichtung mit einem Objektiv (5) und einem planaren Bildsensor (6) zur Erfassung eines Bildes des Objektivs (5), und einer Bildverarbeitungseinrichtung, die zur Ermittlung eines geometrischen Messwertes eingerichtet ist, **dadurch gekennzeichnet, dass** das Objektiv (5) eine nichtgnonomische Abbildungsfunktion besitzt.

2. Aufmaßgerät (1) nach Anspruch 1, **dadurch gekennzeichnet, dass** das Objektiv (5) ein Projektionszentrum definiert und/oder dass das Objektiv (5) ein Fischaugenobjektiv ist und/oder eine äquidistante Abbildungsfunktion besitzt.

3. Aufmaßgerät (1) nach Anspruch 1 oder 2, **dadurch gekennzeichnet, dass** die Abbildungsfunktion eine lineare Abhängigkeit zwischen dem Winkel θ und einem Radius r definiert und/oder dass die Abbildungsfunktion durch ein polynomielles Verzeichnismodell beschreibbar ist.

4. Aufmaßgerät (1) nach einem der Ansprüche 1 bis 3, **dadurch gekennzeichnet, dass** das Objektiv (5) derart ausgebildet ist, dass es im Randbereich stärker verzerrt und/oder dass die Abbildungsfunktion des Objektivs (5) zusätzlich wenigstens eine nichtlineare Abhängigkeit des Winkels θ besitzt und/oder dass die Abbildungsfunktion des Objektivs (5) wenigstens ein zusätzliches Polynomglied eines höheren, insbesondere dem dritten oder höheren, Grades aufweist.

5. Aufmaßgerät (1) nach einem der Ansprüche 1 bis 4, **dadurch gekennzeichnet, dass** der Bildwinkel (φ) des Objektivs (5) größer als 90°, insbesondere größer als 180°, ist.

6. Aufmaßgerät (1) nach einem der Ansprüche 1 bis 5, **dadurch gekennzeichnet, dass** die Abbildungsfunktion des Objektivs durch eine Kalibrierung mit einem Referenzobjekt ermittelbar ist und/oder in der Bildverarbeitungseinrichtung hinterlegbar oder hinterlegt ist.

7. Aufmaßgerät (1) nach einem der Ansprüche 1 bis 6, **dadurch gekennzeichnet, dass** die Bildverarbeitungseinrichtung einen Merkmalsfinder zur Erkennung von Punkt-und/oder Kantenmerkmalen in den aufgenommenen Bildern aufweist, wobei der Merkmalsfinder zur Kantenerkennung in den aufgenommenen Bildern erkannte und mit der Abbildungsfunktion transformierte Linien an eine Gerade approximiert.

8. Aufmaßgerät (1) nach einem der Ansprüche 1 bis 7, **dadurch gekennzeichnet, dass** die Bildverarbeitungseinrichtung einen Merkmalsfinder zur Erkennung von Punkt-und/oder Kantenmerkmalen in den aufgenommenen Bildern aufweist, wobei der Merkmalsfinder zur Kantenerkennung in einem aufgenommenen Bild mit der Abbildungsfunktion transformierte Kanten benutzt.

9. Aufmaßgerät (1) nach einem der Ansprüche 1 bis 8, **dadurch gekennzeichnet, dass** die Bilderfassungseinrichtung und die Bildverarbeitungseinrichtung jeweils oder gemeinsam in einem tragbaren Gerät integriert sind und/oder die Bilderfassungseinrichtung zum Übertragen der Bilddaten an die Bildverarbeitungseinrichtung ausgebildet ist.

10. Aufmaßgerät (1) nach einem der Ansprüche 1 bis 9, **dadurch gekennzeichnet, dass** der Bildsensor (6) senkrecht zur optischen Achse (8) des Objektivs (5) angeordnet ist.

11. Verfahren zum Messen einer geometrischen Größe mit einem Aufmaßgerät mit einer Bilderfassungseinrichtung mit einem Objektiv, das eine nicht-gnomonische Abbildungsfunktion besitzt, einem planaren Bildsensor zur Erfassung eines Bildes des Objektivs, und einer Bildverarbeitungseinrichtung, die zum Erstellen eines dreidimensionalen Modells aus mehreren aufgenommenen Bildern eingerichtet ist, **dadurch gekennzeichnet,**
• **dass** in einem Bildaufnahmeschritt mit der Bildaufnahmeeinrichtung mehrere, nicht perspektivische Bilder eines Objekts aufgenommen werden,
• **dass** in einem Kantenerkennungsschritt in den aufgenommenen Bildern Linien erkannt werden und diese Linien mit der Abbildungsfunktion des Objektivs transformiert werden, wobei die Linien, die sich als Gerade approximieren lassen, als Kantenmerkmal registriert werden,
• **dass** in einem Modellierschritt aus den Linien, die den registrierten Kantenmerkmalen zugeordnet sind, ein dreidimensionales Modell berechnet wird,
• **dass** die geometrische Größe in dem dreidimensionalen Modell bestimmt wird.

12. Verfahren nach Anspruch 11, **dadurch gekennzeichnet, dass** in einem Kalibrierschritt die Abbildungsfunktion des Objektivs bestimmt wird, wobei aus mehreren Bildern eines Referenzobjekts ein Modell berechnet wird und aus den Abweichungen des Modells zu einem Referenzmodell die Abbildungsfunktion bestimmt wird.

13. Verfahren nach Anspruch 11 oder 12, **dadurch gekennzeichnet, dass** in einem Bündelblockausgleichsschritt neben dem eigentlichen Bündelblockausgleich auch eine Optimierung von Kameraparametern durchgeführt wird.
